# EUROPEAN PATENT SPECIFICATION

(11) **EP 3 077 172 B1**
(45) Date of publication and mention of the grant of the patent: **18.07.2018**
(21) Application number: 13898888.6
(22) Date of filing: 06.12.2013
(51) Int. Cl.: B29C 33/42, B29D 30/06, B29C 33/00, B29C 69/02

(54) **IN-MOLD OPTIMIZATION OF FORCE VARIATION HARMONICS**
FORMINTERNE OPTIMIERUNG VON KRAFTVERÄNDERUNGSOBERSCHWINGUNGEN
OPTIMISATION DANS LE MOULE DES HARMONIQUES DE VARIATION DE FORCES

(43) Date of publication of application: 12.10.2016
(73) Proprietor: Compagnie Générale des Etablissements Michelin, 63000 Clermont-Ferrand (FR); MICHELIN Recherche et Technique S.A., 1763 Granges-Paccot (CH)
(72) Inventor: BROWN, Joseph Nicholas, Greenville, South Carolina 29605 (US); STONE, James Edward, Greenville, South Carolina 29605 (US)
(74) Representative: Casalonga
(86) International application number: PCT/US2013/073467
(87) International publication number: WO 2015/084383

(56) References cited:
- US-A- 3 562 861
- US-A- 3 562 861
- US-A- 5 128 089
- US-A- 5 204 036
- US-A- 5 223 065
- US-A- 5 616 859
- US-A- 5 798 124
- US-A- 5 820 796
- US-A- 5 820 796
- US-B2- 6 776 937
- US-B2- 6 841 113
- US-B2- 7 790 075
- US-B2- 7 790 075
- RICH ASHLEY: "The Fight Against Tire Noise - Tire Review Magazine", TIRE REVIEW, 18 July 2013 (2013-07-18), pages 1-8, XP055292430,
- ASHLEY; RICH.: 'The Fight Against Tire Noise.' 18 July 2013, pages 1 - 8, XP055292430 Retrieved from the Internet: <URL:http://www.tirereview.com/article/1160 32/the_fight_against_tire_noise.aspx> [retrieved on 2014-03-31]

## Description

### TECHNICAL FIELD

The presently disclosed invention is generally directed to molds for forming tires. More particularly, the presently disclosed invention is directed to modifiable molds in which only portions of an existing mold need to be adjusted to achieve overall desired harmonic distribution.

### BACKGROUND

In tire design, steering pull may be manifested as a tendency for a vehicle to drift left or right when the steering wheel is released. This pull is caused by a twisting moment on the tire about a Z-axis normal to the contact patch (also known as "aligning torque"), and a lateral force perpendicular to the forward velocity of the vehicle parallel to the Y-axis at the contact patch (also known as " aligning force") at a distance from the center (also known as the "pneumatic trail").

In order to easily tune the average aligning force, sculpture elements may be created with different levels of force and combined in a way to create the desired average force. The geometry of individual tread design elements (also known as "pitches" or "pitch elements") may be modified to control variations in the aligning force. Basic parameters for pitch arrangement include the total number of pitches, the total number of different pitch types, the pitch size of each type (including but not limited to pitch length), the number of pitches for each type and the pitch sequence. By providing a plurality of sequentially arranged elements and element patterns, the frequency of vibration of each element and element pattern will differ.

A challenge exists in minimizing the vibration caused by variations in the aligning force, particularly when such variations are incurred by intentional force variations used to tune the overall average aligning force. Current sculpture arrangement optimization models create a representative time signal of tire vibrations by applying a time signal to each tread block based on the length of that block. This is then converted to harmonics components through a Fast Fourier Transform (FFT). The distribution of this spectrum is then optimized to eliminate tonal peaks and psychoacoustics annoyances. It may be observed that random modulation of the placement of different pitch types and lengths breaks up the tonality of such generated sound by spreading the acoustic energy more evenly throughout the noise spectrum. Minimization of force variations, however, does not inherently minimize the vibration frequency that might be caused by alignment force variations.

Therefore, a manufacturing solution is demanded that can optimize force variation harmonics while preserving the benefits of alignment force variations.

### SUMMARY

A mold is provided for modifying force variation harmonics in a tire having a tread formed from the mold. The mold includes an arrangement of tread-molding elements. The arrangement, which includes at least one of one or more removable tread-molding elements and one or more alternative removable tread-molding elements, defines at least one tire pitch sequence. The tread-molding elements are selectively arranged to effect adjustment of the at least one tire pitch sequence to achieve an overall target harmonic distribution for the arrangement.

In some embodiments, the plurality of tread-molding elements may define a total plysteer contribution of the mold. The plurality of tread-molding elements may include at least one of one or more removable tread-molding elements with each element having a predetermined plysteer contribution, and at least one alternative removable tread-molding element having a predetermined plysteer contribution that differs from the predetermined plysteer contribution of the one or more removable tread-molding elements. In some embodiments, a measured harmonic distribution of the at least one tire pitch sequence tire is compared with the overall target harmonic distribution. A measured plysteer parameter of the tire may also be compared with a target plysteer parameter for the tire, and the one or more plysteer parameters to be measured and compared include at least one of plysteer residual aligning torque, plysteer residual lateral force and plysteer residual corning force.

Some embodiments contemplate selective arrangement of the tread-molding elements that includes substitution of at least one of the one or more removable tread-molding elements with at least one alternative removable tread-molding element to effect at least one of adjustment of the at least one tire pitch sequence and adjustment of the total plysteer contribution of the mold.

The foregoing and other objects, features and advantages of the invention will become readily apparent from the following detailed description.

### BRIEF DESCRIPTION OF THE DRAWINGS

The nature and various advantages of the present invention will become more apparent upon consideration of the following detailed description, taken in conjunction with the accompanying drawings, in which like reference characters refer to like parts throughout, and in which:
FIG. 1 shows an exemplary prior art mold arrangement having elements with equal PRAT contribution.
FIGS. 2(A) and 2(B) show variance in a road crown in a right-hand-side driving region and a left-hand-side driving region, respectively.
FIG. 3 shows a partial sectioned perspective view of an exemplary tire mold having a plurality of tread-molding elements.
FIG. 4 shows a partial side perspective view of an exemplary tire formed with the mold of FIG. 3.
FIG. 5 shows a top view of an exemplary arrangement of a plurality of tread-molding elements for use in the mold of FIG. 3.
FIG. 6 shows an exemplary mold arrangement having elements with unequal PRAT contribution as presently disclosed.
FIGS. 7 and 8 show exemplary variations of the mold arrangement of FIG. 6.
FIG. 9 shows exemplary comparative testing results for predicted and measured values for an exemplary sample of tires produced from molds having modified elements as presently disclosed herein.
FIG. 10 shows exemplary tread frequency harmonics for an exemplary sample of tires during a coastdown from 70 kph to 40 kph.
FIG. 11 shows exemplary tread frequency harmonics for an exemplary of tires during a coastdown from 110 kph to 60 kph.
FIG. 12 shows an exemplary representation of a harmonic spectrum observed in an exemplary tire pitch sequence as presently disclosed.

### DETAILED DESCRIPTION

The presently disclosed invention is directed to molds for optimizing force variation harmonics of molded tires. Such harmonic optimization is effected in concert with the intentional variation of elements to attain an overall average aligning force. Elements, and arrangements of elements, may be intentionally varied to effect adjustment, alteration and/or correction of one or more plysteer parameters of molded tires.

A variation of this harmonic optimization is currently used for optimizing the arrangement of tread block sizes on a tire sculpture. Some tire designers tune alignment force through architecture at the compromise of cost and other implicit and explicit performances (including performances at least partially attributable to one or more plysteer parameters). Other tire designers tune alignment force by creating entirely new molds that require significant temporal and fiscal investments. As presently disclosed herein, mold elements may be arranged such that a frequency sequence created by successive elements and element patterns may progressively decrease and increase. Such a frequency sequence may be representative of a tire's vibrational and/or torsional characteristics.

The presently disclosed invention optimizes alignment force variations instead of the higher frequency tread block pattern noise. Depending upon the level of alignment force variations, potential vibrational effects may be attenuated or eliminated by one or more of addition, subtraction, substitution and rearrangement of mold elements. The presently disclosed invention thus provides solutions for modifying only a portion of a tire mold in a manner that does not significantly impact other performances and allows after-the-fact tuning.

In a broadband spectrum, total acoustic energy is distributed over a wide range of frequencies. In a spectrum having lofty peaks, acoustic energy is concentrated at certain frequencies, making an unpleasant emitted sound. Solutions to this problem often require design by trial and error (e.g., a tread pattern must be designed, built and tested before vibrational and/or torsional characteristics are known). While different tread patterns may produce the same amount of energy, the vibrations realized by each pattern may be different. The difference in vibrational characteristics is represented in the frequency spectrum or degree of tonality (i.e., a condition in which a sound generated is dominated by a single frequency and its harmonic). If sound energy can be spread out over a wider range of frequency, it would reduce tonality. Therefore, even when a tread pattern having preselected vibrational and/or torsional characteristics is derived algorithmically, such tread pattern, when molded, may require adjustment.

A tread experiences a frequency of vibration characteristics in at least a portion of the tread then in engagement with the surface (also referred to herein as the "contact patch"). As used herein, a tire contact patch or tire "footprint" may include an area of contact between the tire and a ground-surface upon which the tire operates. In consideration of generation of a "white noise" audio spectrum (i.e., energy present at all frequencies in equal magnitudes), intentional force variations (e.g., those effected to attain desired plysteer parameters including plysteer residual aligning torque, or "PRAT") may be modified via substitution of one or more removable tread-molding elements within a tire mold.

In some embodiments, at least one element (or at least one arrangement of elements) may be adjusted to correspondingly adjust the total plysteer contribution of the mold. Among the various plysteer parameters for which adjustment may be effected, PRAT can be modified by modifying only a portion of a tire mold. PRAT is a plysteer parameter that quantifies a tire's tendency to move laterally relative to a rolling direction based upon the creation of a moment or torque acting on the tire by way of the tire footprint. In North America and Europe (i.e., right-hand-side driving regions), an acceptable PRAT is about -3 N-m, although this parameter may vary by road type and vehicle design. In Japan and other left-hand-side driving regions, a positive PRAT may be required.

PRAT represents a moment or torque acting on the tire and can be expressed in terms of a plysteer residual lateral force ("PRLF") multiplied by a pneumatic trail of the tire's footprint. PRLF (also referred to herein as plysteer residual cornering force, or "PRCF") represents the resultant or effective lateral force acting along the length of a tire footprint. The pneumatic trail is the distance between the longitudinal centerline of the footprint and the longitudinal location of the PRLF. Therefore, if the PRAT changes, then at least one of the PRLF and the pneumatic trail changes.

Accordingly, as presently disclosed, the description of PRAT can be used interchangeably with PRLF (which is also used interchangeably with PRCF) and the pneumatic trail unless specifically noted. Moreover, PRAT, PRLF and PRCF may each be referred to herein as a "plysteer parameter" and collectively as "plysteer parameters" as each parameter contributes to the generation and control of plysteer in a tire.

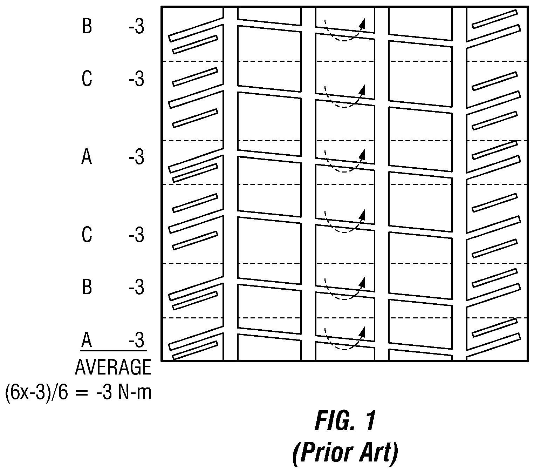

Due to tire manufacturing processes, one or more of a tire's PRAT, PRLF and pneumatic trail (and therefore a tire's harmonics) may not be truly known until the tire is molded. For example, molds may be designed with elements having equal PRAT contribution as shown in FIG. 1 (with exemplary elements A, B, C having equal PRAT contribution). Other molds (not shown) may be designed with unequal PRAT contribution (e.g., with an exemplary element A having unequal PRAT contribution relative to the contributions of exemplary elements B and C). In certain instances, after a tire construction has been designed to achieve an intended PRAT in conjunction with a particular mold design, the PRAT of the molded tire may still deviate from the intended value. Correction of the PRAT, without effecting any change to the tire construction design, necessitates adjustments to the mold. Major mold investments must be made, and changes after the pattern freeze become very costly not only due to the labor and material required, but also due to the loss in tire production during mold replacement.

While PRAT, as well as the PRLF and the pneumatic trail, can be generated by the arrangement of various components within a tire's construction (sometimes known as a "tire construction plysteer contribution"), PRAT, as well as the PRLF and the pneumatic trail, can also be generated by forming certain features in a tire's tread (known as the "tread plysteer contribution"). It is the sum of all plysteer contributions acting within the tire footprint that generates a corresponding PRAT or PRLF during tire operation. As disclosed herein, alignment of mold elements to produce a desire plysteer contribution (or sum of contributions) can be effected while attenuating the vibration frequency inherent in the force variations caused by such alignment.

Tire conicity may also impact a tire's tendency to pull laterally, as conicity quantifies a tire's tendency to pull laterally based upon the shape of the tire. This tendency may affect a vehicle's steering performance. Generally, the more conical a tire is shaped, the more conicity is exhibited by the tire (that is, the more lateral pull the tire exhibits). Accordingly, the modification of a mold portion to adjust conicity may also be considered in connection with the presently disclosed invention.

The presently disclosed molds, allow optimization of a tire's torsional qualities without deleteriously effecting any consequent adjustments one or more other parameters of the tire, including the tire's plysteer parameters. Some embodiments include providing a mold having a plurality of removable tread-molding elements that, together, define a total plysteer contribution of the mold and optimize the harmonic variances among the tread-molding elements. The removable tread-molding elements (or "tread molding elements") may include one or more removable tread-molding elements each having a predetermined plysteer contribution. The removable tread-molding elements may also include one or more tread-molding elements that are selected to modulate a tread frequency harmonic produced upon impact by the tire upon a ground surface.

To form a molded tread, whether as part of a tire or separate from the tire, one or more of the removable tread-molding elements may be selectively arranged within the mold to form a molded tread having an outer, tire-operating side (also referred to herein as the "ground-engaging side" of the tread). The tire-operating side of the tread includes exposed surfaces that are configured to engage a ground surface upon which the tire operates (i.e., the ground-engaging side of the tread extends annularly about the tire).

In some embodiments of the presently disclosed invention, one or more of a plurality of alternative removable tread-molding elements may be designed and made available for use in the mold to minimize any vibration incurred by intentional force variations. Selected alternative tread-molding elements may contribute to the adjustment of one or both of the mold's total plysteer contribution and its harmonic characteristics. By substituting certain tread-molding elements within the mold, the need to modify or replace the entire mold is obviated as is any production delay that would be realized by design and manufacture of a new mold.

By being removable, substitutable and/or rearrangeable, the tread-molding elements may be arranged in any desired arrangement and added, subtracted and/or replaced as necessary to adjust or alter the vibrational and/or torsional qualities of a tire formed by the mold. Similarly, by being removable, substitutable and/or rearrangeable, the tread-molding elements may be arranged in any desired arrangement and added, subtracted and/or replaced as necessary to adjust or alter the total plysteer contribution of the mold (also referred to herein as the "total plysteer of the mold" or "mold plysteer"), which in turn is molded into a tire tread and ultimately used to generate a plysteer parameter in a tire. Any removable tread-molding elements known to one of ordinary skill may be employed. As used herein, the terms "substitute", "add", "subtract", "remove", "rearrange" and like terms may be used interchangeably to refer to modification of one or more tread-molding elements, or one or more patterns of elements.

It is understood that all of the tread-molding elements within the mold, at any time, may or may not be of the same design. It is also understood that a single tread-molding element may contribute to frequency modulation, or pairs or groups of tread-molding elements may be combined to attain a desired harmonic response. The tread-molding elements may be rearranged, added, substituted and/or replaced as single elements or as pairs or groups. Any pairs or groups may be modified as a pair or group, or the pairs or groups may be modified by substation of one or more elements within the pair or group. Any arrangement of elements, including pairs and groups thereof, may form all or part of a tire pitch sequence that may be modified to derive a target harmonic response. Modification of the tire pitch sequence negates the need to modify or replace an entire mold while also preserving other performance criteria of the molded tire (including, but not limited to, target plysteer parameters). In any mold contemplated herein, one or more tread-molding elements may be arranged in an array to define a tread molding cavity for forming a molded tread, whether in a tire mold or in a tread mold. The array extends along a length of the tread-molding cavity (i.e., in a lengthwise direction of the tread) to define a length of the tread. The tread-molding elements may incorporate one or more designs, which designs may differ subtly or substantially. For example, differently designed tread-molding elements may be used and selectively arranged within the array to control vibrations generated by the tire during tire operation. For example, each of the differently designed tread-molding elements may contain different components for forming different tread void features, or may create different pitches for controlling vibration generation.

It is understood that the removable tread-molding elements may extend at least partially across a full width of a tread molding cavity of the mold to form at least a portion of a ground-engaging side of the tread. When extending partially across a width of the tread, at least some of the tread-molding elements may be arranged side-by-side in a laterally adjacent arrangement to form a full width of the tread. One or more of the tread-molding elements may comprise a tire pitch sequence that modulates the tread frequency harmonic of a tire produced by the mold when tread-molding elements of varying plysteer contributions are selected for employment in the mold. Consequently, the mold may include one or more removable tread-molding elements defining a total plysteer contribution of the mold. In doing so, at least one of the tread-molding elements has a non-zero plysteer contribution (i.e., a plysteer contribution greater or less than zero). It is understood that the plurality of tread-molding elements may include two or more different tread-molding element designs each having a different plysteer contribution. It is also understood that each and every tread-molding element of the plurality of tread-molding elements may not have a plysteer contribution, as one or more of the plurality of tread-molding elements may have no plysteer contribution (i.e., a zero plysteer contribution).

In some embodiments, the tread-molding elements may include a preselected or predetermined quantity of differently designed and interchangeable tread-molding elements having different plysteer contributions. In particular embodiments, the selected design and the alternative design may have opposite plysteer contributions of equal absolute value. For example, if one of the selected and alternative designs has a PRAT value of X, the opposite PRAT contribution is -X (or X multiplied by negative 1). So if a tread-molding element had a PRAT contribution of -1.0 Newton-meters (N-m), an opposite PRAT contribution would equal 1.0 N-m.

To provide adjustability in each plysteer parameter direction, and therefore adjustability in the tire pitch sequence, the plurality of removable tread-molding elements provided with the mold may include equal quantities of one or more removable tread elements of a selected design and one or more removable tread elements of an alternative design, each of which is interchangeable. In such embodiments, the mold contains a 1:1 ratio of tread-molding elements of a selected design to alternative tread-molding elements of an alternative design. In this way, the total plysteer contribution, along with the tire pitch sequence, of the mold may be controlled by adjusting the ratio of tread-molding elements of selected and alternative designs. For example, when substituting all of the tread-molding elements of the design with those of the alternative design, the total plysteer contribution may be adjusted to an initial or ultimate limit within an adjustable range or to any value within that range. The resultant tread frequency harmonic may likewise be adjusted to upper and lower thresholds within an adjustable range, and any value therebetween, by adjusting the tire pitch sequence. It is understood that additional alternative tread-molding elements of any other design may also be employed as a substitute for the tread-molding elements of the selected design or any other tread-molding element of another design forming the plurality of tread-molding elements.

The presently disclosed invention contemplates measuring the harmonic distribution exhibited by a tire upon impact with a ground surface. The measured harmonic distribution is compared with an overall target harmonic distribution. The measuring and comparing reveals whether the tire pitch sequence of the mold needs to be adjusted.

In some embodiments, one or more plysteer parameters of a formed tire are measured and compared with a target plysteer parameter for the tire. The one or more plysteer parameters to be measured and compared include at least one of PRAT, PRLF and PRCF. The measuring and comparing reveals whether the total plysteer contribution of the mold needs to be adjusted to form a tire having a measured plysteer parameter more closely achieving a desired, intended and/or targeted plysteer parameter value.

In some embodiments, at least one of the tread frequency harmonics and the plysteer parameters of the tire may be measured as the tire rolls along a ground surface. An approximate difference may be determined between the measured values and target values intended for the tire. Accordingly, at least one of the tread frequency harmonic and the plysteer parameter of the tire may be intermittently or continuously measured as the tire rolls during operation. In so doing, it may be determined that only a portion of the tire tread around the circumference of the tire generates values different than one or more target values for the tire. In response, at least one of the tire pitch sequence and the plysteer contribution of only a certain portion of a tread molding cavity may be altered by replacing particular tread-molding elements therein.

When the harmonic distribution is determined to have a value other than a corresponding target value (i.e., greater or less than a target range of the value), adjusting the tire pitch sequence may include substituting one or more tread-molding elements with at least one other tread-molding element having a different tire force contribution (e.g., when the vibration generated by the tire during use exceeds a maximum vibration threshold or an average vibration threshold targeted for the tire). If it was determined that the total vibration generated by the tire was approximately or closely equal to the target vibration level or a targeted average vibration level of the tire, and/or that any substitution of an available or preselected tread-molding element would not improve the measured harmonic distribution, then no substitution is performed.

Once the total tire pitch sequence of a mold is adjusted in concert with variations in the aligning force caused by adjustment of the mold's total plysteer, a subsequent tire may be formed by forming a tire using the adjusted mold. Adjustment of the mold to account for vibration caused by variations in the aligning force does not negatively affect the performance improvements realized by such variations.

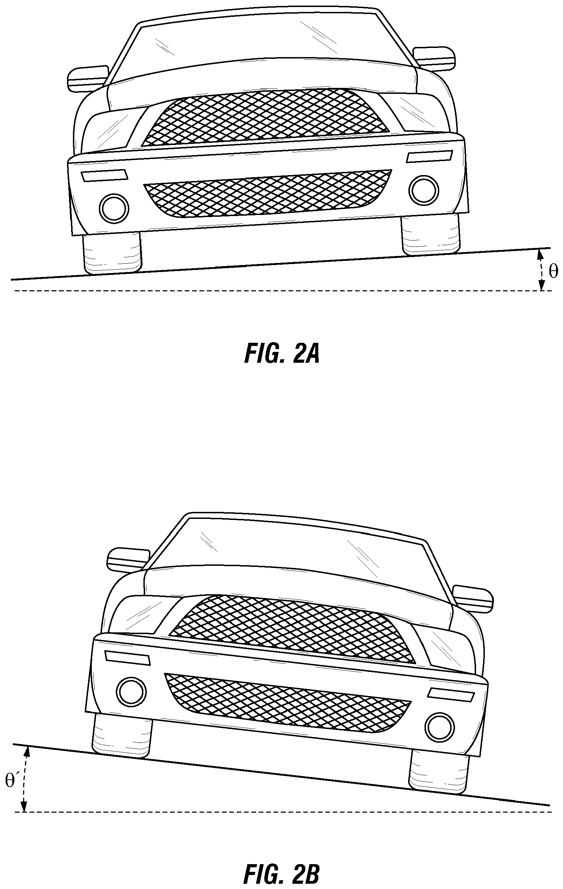

Now referring to the figures, wherein like numbers represent like elements, a tire may be designed to exhibit desired performance characteristics. Among such characteristics is the tire's tendency to pull toward a road centerline to counteract a crown formed in the road, thereby allowing the tire to roll in a straight line. As shown respectively in FIGS. 2(A) and 2(B), the road crown varies in a right-hand-side driving region (e.g., France, Germany, Korea, USA, etc.) and a left-hand-side driving region (e.g., Australia, Japan, United Kingdom, etc.). Straight turning of a vehicle is a relevant safety feature of vehicle performance. Vehicle manufacturers have established limits on the amount of permissible drift. Thus, in tire design, predicted drift or lateral pull (i.e., to drift or pull sideways as the tire rolls along a desired path) may be a design feature.

Lateral drift or pull may be adjusted by adjusting one or more plysteer parameters in a tire during fabrication thereof. To achieve a desired plysteer parameter in a tire, and more specifically, a desired plysteer parameter in a tire footprint at any given time during tire operation, a mold may be designed with a target or intended total plysteer contribution. It is the sum of all plysteer contributions acting within the tire footprint that generates a corresponding PRAT or PRLF during tire operation.

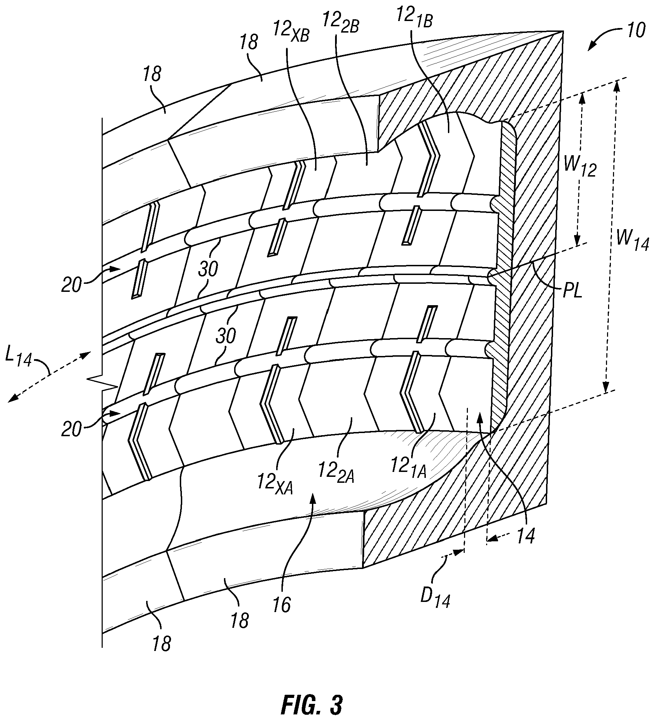

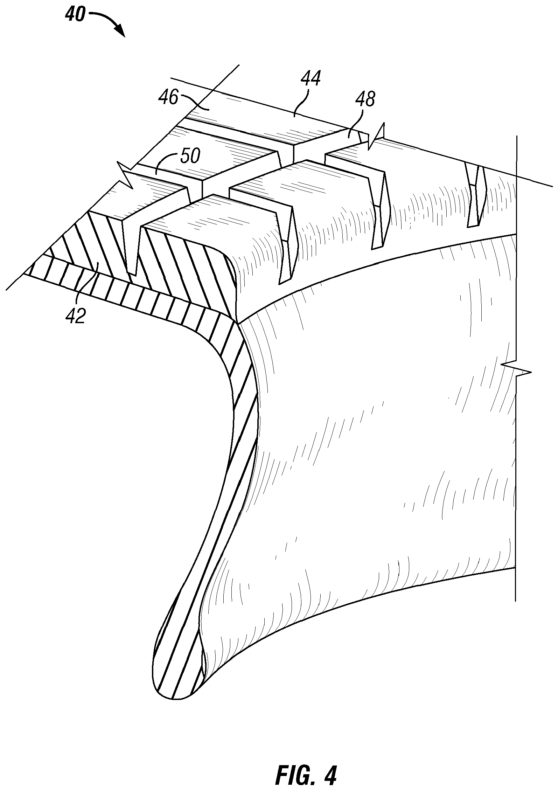

With further reference to FIG. 3, an exemplary tire mold 10 is provided having a plurality of tread-molding elements 12 forming a tread molding cavity 14. In the tire mold, the tread molding cavity forms a portion of the tire molding cavity 16, which is configured to also receive, shape and form other portions of the tire, such as opposing tire side walls. The mold 10 of FIG. 1 is used to form an exemplary tire, such as tire 40 shown in FIG. 4, in accordance with the presently disclosed methods.

Tire 40 includes a tread 42 having an outer, ground-engaging side 44 having ground-engaging surfaces 46. By virtue of being molded with the tire 40, the tread 42 and ground-engaging side 44 have a length extending annularly around the tire. It is noted that mold 10 shown in FIG. 3 includes a longitudinal groove-forming member 30 extending in lengthwise direction of the tread molding cavity 16 for use in forming an exemplary longitudinal groove 48 in the tire tread 42 as shown in FIG. 4. It is understood that tread 42 may exhibit any one of a plurality of configurations without departing from the scope of the present disclosure.

By example, mold 10 is shown as a segmented mold, where the mold cavity is formed by numerous mold sections 18 being radially displaceable during mold opening and closing operations. Nonetheless, any known mold type may be employed. For example, the mold may comprise a clamshell-type mold having opposing halves, where the opposing halves translate axially relative the tire during mold opening and closing operations. It is understood that mold 10 may instead form a tread mold, which may mold a tread having a length extending linearly or annularly. As such, the tread molding cavity may exist without other mold cavity portions configured to receive other portions of a tire.

Because the tread molding cavity forms a negative or relief of the tread, when a mold feature is described or defined relative to the tread molding cavity, it is understood that a corresponding tread feature can be described or defined relative to a tread or tire formed by any mold described herein. Furthermore, lengthwise, widthwise and depthwise directions of the tread mutually correspond with respective lengthwise, widthwise and depthwise directions of the tread molding cavity. The lengthwise or longitudinal direction of a tread, for example, extends along a length of the tread parallel to a lateral centerline of the tread. For example, the lengthwise direction may be circumferential when the tread is molded to an annular tire, or may be linear when the tread is molded in a flat tread mold. The widthwise direction of a tread extends laterally along a width of the tread relative the lengthwise direction or length of the tread. The depthwise direction of the tread extends transverse through the tread thickness. The lengthwise, widthwise and depthwise directions extend such that each is perpendicular to the other.

The tread-molding elements are arranged within the mold to form a length of the tread molding cavity and therefore a length of tread. In some embodiments, the tread-molding elements are arranged in one or more arrays extending along a length, and in a lengthwise direction, of the tread molding cavity. For example, with reference to FIG. 3, a plurality of exemplary tread-molding elements 12 are arranged in a pair of arrays 20. Each array extends in a lengthwise direction L₁₄ of the tread molding cavity 14, and in effect a lengthwise direction L₁₄ of the molded tread. Arrays 20 are separable along a mold parting line PL.

With reference to FIG. 3, for example, tread-molding elements 12 may be shifted in a longitudinal direction L₁₄ of the tread molding cavity 14. In other embodiments, tread-molding elements 12 may be aligned in a longitudinal direction L₁₄ of the tread molding cavity such that the entire length of each tread-molding member of the pair is laterally adjacent the other. In other words, laterally adjacent arrays of tread-molding elements may be aligned longitudinally.

It is also understood that the plurality of tread-molding elements may be designed such that one or more tread-molding elements are arranged laterally to extend across a full width of the tread molding cavity to mold a full width of the tread. For example, with reference to FIG. 3, each tread-molding element has a width W₁₂ such that a plurality of tread-molding elements 12 forms numerous pairs of laterally adjacent tread-molding elements. Each such pair includes a tread-molding element arranged laterally adjacent another tread-molding element to collectively extend across the full width W₁₄ of the tread molding cavity 14 for forming a full width of a corresponding tread. Two or more laterally adjacent tread-molding elements may be configured to extend across a full width of the tread molding cavity for forming a full width of a tread. Furthermore, the lateral arrangement of two or more tread-molding elements extending across a full width of the tread molding cavity may include tread-molding elements of the same design, or of two or more different designs.

For example, each of two or more tread-molding elements arranged in the mold may have the same plysteer contribution, or may have a different plysteer contribution. Therefore, it is understood that the longitudinal or lengthwise alignment of laterally adjacent tread-molding elements or arrays may vary. Any vibrations incurred by such intentional variations in the longitudinal or lengthwise alignment of adjacent tread-molding elements can be optimized thereafter without compromising the target plysteer contribution of the mold attained by such intentional variations. For example, the degree of variation in longitudinal and/or lengthwise alignment of laterally adjacent tread-molding elements may be adjusted.

A tread-molding element having a different plysteer contribution that is interchangeable with another tread-molding element is referred to herein as an alternative tread-molding element. It is understood that more than one alternative tread-molding element design may be provided such that each of the different alternative tread-molding element designs have different, interchangeable plysteer contributions. With reference to FIG. 3, for example, the plurality of tread-molding elements include one or more selected removable tread-molding elements of a first design 12_{1A}, 12_{1B}, one or more selected removable tread-molding elements of a second design 12_{2A}, 12_{2B} and one or more alternative tread-molding elements of an alternative design 12_{XA}, 12_{XB}.

As used herein, an alternative tread-molding element may also refer to a tread-molding element that is interchangeable with another tread-molding element and has a different tread frequency harmonic contribution. An alternative tread-molding element may be incorporated in one or more tire pitch sequences. An alternative tread-molding element having such a frequency contribution may also have a different plysteer contribution than a tread-molding element with which the alternative tread-molding element is interchangeable.

Accordingly, it can be said that tread-molding element 12_{1A} forms one of a pair of tread-molding elements 12_{1A}, 12_{1B} and the alternative tread-molding element 12_{XA} forms one of an alternative pair of tread-molding elements 12_{XA}, 12_{XB}. The tread-molding elements in each pair may be arranged side-by-side to extend across at least a partial or a substantial full width of the tread molding cavity to form at least a portion of a width of a ground-engaging side of the tread. As such, each alternative tread-molding element 12_{XA}, 12_{XB} may be interchangeable with a corresponding removable tread-molding element 12_{1A}, 12_{1B} in each corresponding array 20. Therefore, because substituting an alternative tread-molding element for a removable tread-molding element, or vice versa, alters the total plysteer contribution for the mold, it is understood that the selected and alternative designs provide different plysteer contributions. For example, one of the selected and alternative designs has a non-zero plysteer contribution while the other may have any other non-zero or zero plysteer contribution. In another example, the alternative design may have a predetermined plysteer contribution with an absolute value equal to the predetermined plysteer contribution of the design being substituted.

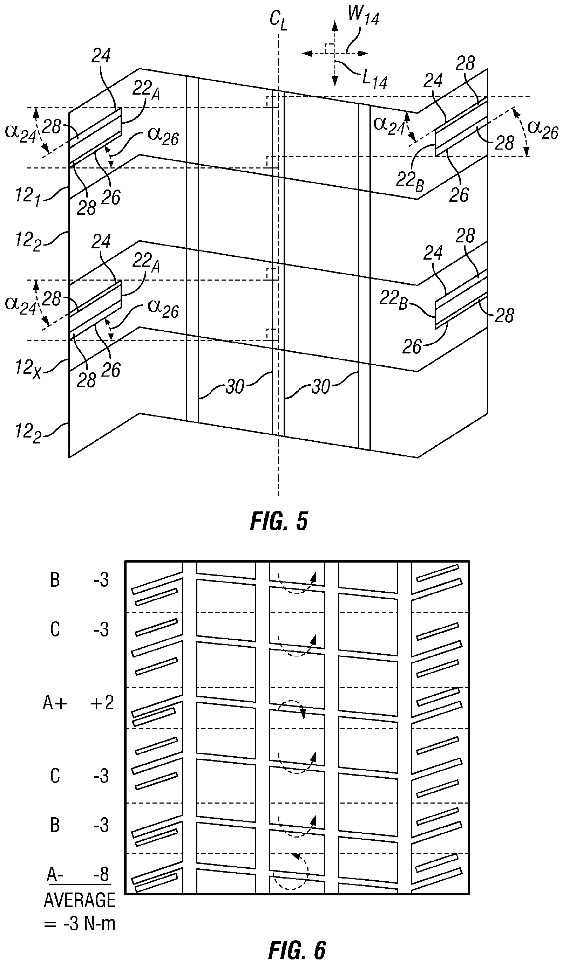

Adjustment of the total mold plysteer contribution can be further described in association with FIG. 5. With reference to FIG. 5, a patterned arrangement of tread-molding elements 12 is shown that is repeated within the mold. The pattern of elements forms a single array or series 20 having a removable tread-molding element 12₁ of a first design, a removable tread-molding element 12₂ of a second design, and an alternative tread-molding element 12_{X} of an alternative design. At least elements 12₁ and 12₂ provide different plysteer contributions, where the alternative tread-molding element 12_{X} is interchangeable with removable tread-molding element 12₁. Therefore, to change the total plysteer contribution, one of tread-molding elements 12₁, 12_{X} may be substituted with the other.

Removable tread-molding element 12₁ of the arrangement in FIG. 5 may be replaced with an alternative tread-molding element 12_{X} to alter the total plysteer contribution of the mold. It is understood that multiple alternative designs to removable tread-molding element 12₁ may be provided each having a different plysteer contribution to further alter the total plysteer contribution of the mold. Moreover, one or more alternative designs to removable tread-molding element 12₂ of a second design may also be provided to provide further plysteer parameter adjustability for the mold.

It is noted that the elements shown in FIG. 5 include a plurality of tread-molding elements having equal quantities of selected removable and alternative tread-molding elements 12₁, 12_{X}. As discussed herein, this facilitates equal adjustment of a plysteer parameter in opposite directions (i.e., to increase and decrease the total plysteer parameter) relative to the total plysteer contribution of the mold when the selected removable and alternative tread-molding elements have opposite plysteer contributions.

It is understood that any manner of creating a plysteer contribution, and therefore achieving an alternative design, in a tread-molding element may be employed. For example, plysteer contributions may be generated by adding a lateral groove to a molded tread. A lateral groove has a length extending longitudinally partially or fully across a width of the tread. The lateral groove extends longitudinally in a lateral direction at any angle relative to an imaginary line extending perpendicular to the lengthwise or longitudinal direction of the tread. As such, the imaginary line defines a widthwise direction of the tread. It is appreciated that any one or more tread-molding elements may be configured to form such a lateral groove. In particular, a tread-molding element includes a lateral groove-forming member to achieve such purpose. The lateral groove-forming member forms a negative or relief of the groove to be formed, where the tread-molding element is arranged relative the tread molding cavity just as the lateral groove is arranged relative the tread.

A plysteer parameter may be controlled by altering various features of the lateral groove, and therefore altering related features arranged along one or more tread-molding elements. For example, a lateral groove length may be increased or decreased, and/or a lateral groove location may be changed. In another example, a plysteer parameter may be controlled by altering a slope or inclination angle of any side of a pair of sides defining a width of a lateral groove (the pair of sides is also referred to as "first" and "second" sides). Because each side includes one or more side walls, altering the slope or inclination angle of either side alters the slope or inclination angle of a corresponding groove side wall. An inclination angle so altered may be measured from an imaginary reference line extending in a depthwise direction of a tread thickness and normal to both a lengthwise direction and a widthwise direction of the tread. Accordingly, with respect to the mold, this is achieved by altering any corresponding side of a pair of opposing sides forming a width of the lateral groove-molding member.

It is understood that tread-molding element designs may differ by any desired plysteer parameter value as desired. For example, with continued reference to FIG. 5, a plysteer contribution of removable tread-molding element 12₁ may be opposite in value to a plysteer contribution of alternative tread-molding element 12_{X}.

In other exemplary embodiments, a plysteer parameter may be controlled by varying a direction by which a lateral groove (or any side thereof defining a width of the groove) extends laterally along a width of the tread. Thus, a plysteer parameter may be controlled by varying an angle by which any one or more lateral grooves deviates from an imaginary reference line extending in widthwise direction of the tread (i.e., where the imaginary reference line extends perpendicular to a longitudinal direction and a depthwise direction of the tread).

### EXAMPLE:

A first mold (or "reference") is provided as shown in FIG. 1 having exemplary elements A, B, C with equal PRAT contribution. Therefore, PRAT for ABCACB = -3 N-m with each element contributing approximately -3 N-m. A second mold is provided as shown in FIG. 6 with the A elements replaced by equal numbers of A⁻ elements at -8 N-m and A⁺ elements at +2 N-m. The A⁺ and A⁻elements were designed with ±6° Psi 3 as compared with the reference. The B and C elements each contribute -3N-m. Therefore, PRAT for A⁻BCA⁺CB=-3 N-m.

Thus, while both exemplary molds have the same PRAT, the second mold may be easily altered to attain a desired PRAT value. Additional A⁺ and A⁻ elements may be constructed to permit a range of combinations. It is understood that the molds are not limited to the three elements shown herein and that the PRAT (and other plysteer) contributions of selected elements are not limited to the values provided herein. Such combinations and values are provided by way of example to illustrate that an existing mold can be modified easily without detriment to production capacity. Alterations may be made throughout a mold's lifetime to attain one or more desired plysteer parameters, such as PRAT.

### EXAMPLE:

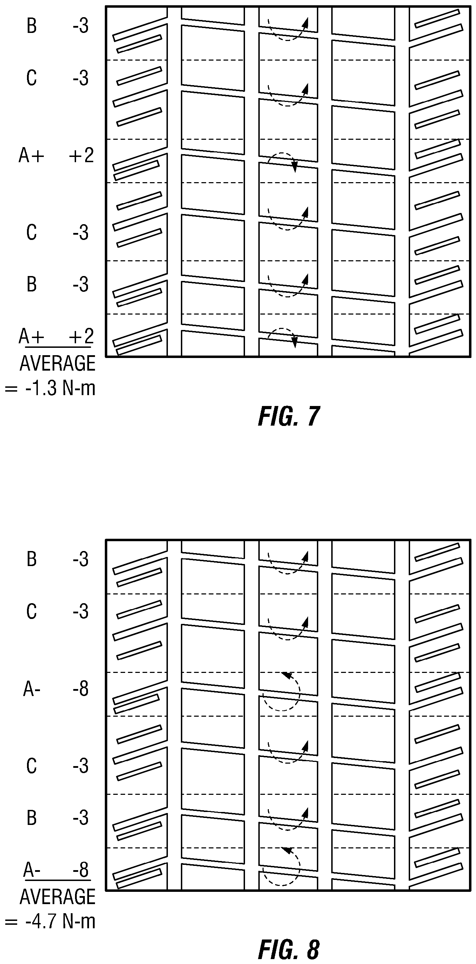

An exemplary alteration of the mold arrangement of FIG. 6 is shown in FIG. 7. To effect a full positive PRAT adjustment, exemplary element A⁻ at -8 N-m is replaced by exemplary element A⁺ at +2 N-m. The B and C elements each contribute -3 N-m. Therefore, PRAT for A⁺BCA⁺CB=-1.3 N-m.

### EXAMPLE:

Another exemplary alteration of the mold arrangement of FIG. 6 is shown in FIG. 8. To effect a full negative PRAT adjustment, exemplary elements A⁺ at +2 N-m are replaced by equal numbers of exemplary elements A⁻ at -8 N-m. The B and C elements each contribute -3 N-m. Therefore, PRAT for A⁻BCA⁻CB=-4.7 N-m.

Therefore, tread-molding elements of having different plysteer contributions may be exchanged for one another to adjust or alter the total plysteer contribution of the mold. Such exchange (or addition, subtraction or substitution) may be effected only along a portion of the mold. In doing so, while it is appreciated that more than one tread-molding element may replace a single tread-molding element, a single tread-molding element may replace a single tread-molding element of a different design. In methods of adjusting a plysteer parameter in a tire, the total plysteer contribution of the mold may be increased or decreased as necessary to arrive at a total plysteer for the mold to obtain a plysteer parameter value for the tire that is equal to, approximately equal to or otherwise closely representing the targeted or intended plysteer parameter value for a tire.

The demonstrated variance in arrangement of elements to achieve certain performance parameters (including plysteer parameters) "tunes" the overall average aligning force to a desired target value. As shown in the example below, a portion of the mold may be identified and modified (or only a portion thereof modified) to demonstrate the variability of the interchangeable mold elements and the effectiveness of selectively changing these elements to adjust the overall harmonic distribution when the plysteer contribution of the mold is adjusted

### EXAMPLE:

Five (5) ideal and worst-case repartitions of exemplary molds were produced using elements A, B and C of different plysteer contribution. The tires were produced with the following arrangements, where the A elements were modified to effect adjustments to the mold and the modification represents about ±6° relative to the reference:
- G = reference (elements ABC)
- A = elements A-BC (thus, A⁻ replaces A)
- B = 50% A-, 50%A+, BC with best arrangement
- C = 50%A-, 50%A+, BC with worst arrangement (e.g., all positive elements on one side and all negative elements on the other side)
- D = elements A+BC (thus, A⁺ replaces A)
- E = 50%A+, 50%A-, BC with best arrangement

The tire size for all samples was 245/50R20, and the reference tires were cured in accordance with existing curing specifications. The remaining tires were cured to permit adjustments (i.e., changing one or more of the elements) to a single mold. A comparative testing plan was devised for observing several tire performance parameters including low speed uniformity (LSU), cam pull (CAMPULL), high speed uniformity (HSU), coastdown noise (e.g., from 70-40 kph and from 110-60 kph) and subjective noise.

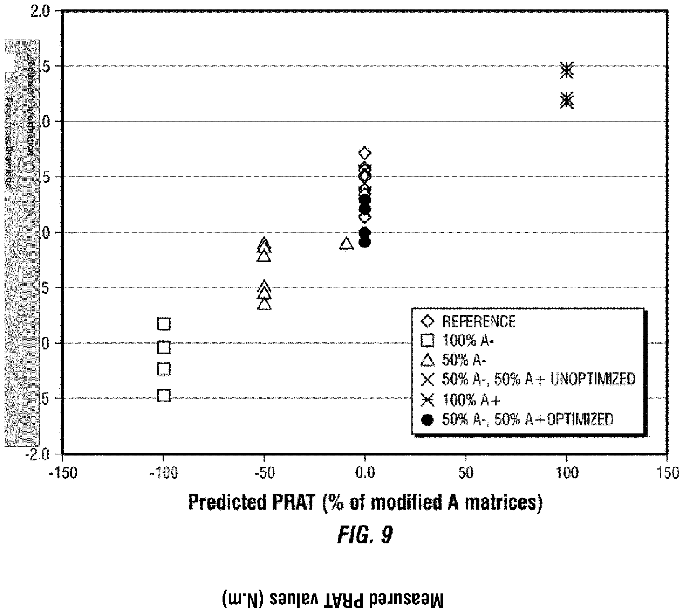

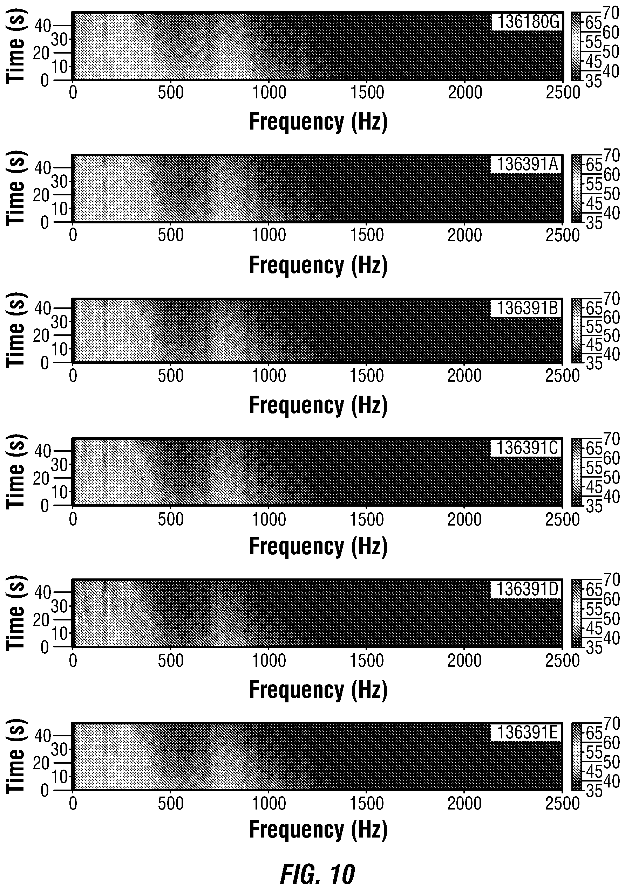

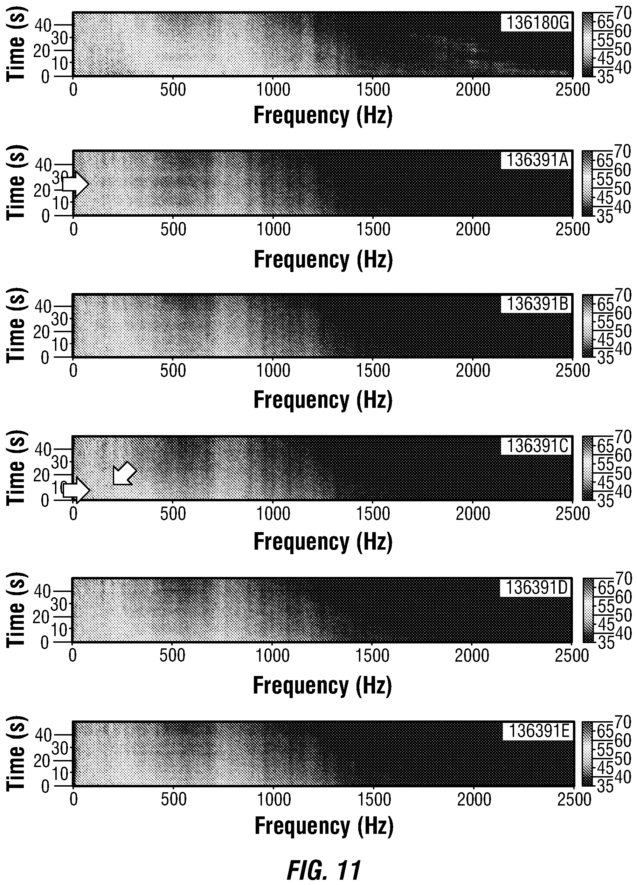

Referring to FIG. 9, the measured CAMPULL values show a close correlation between predicted and measured PRAT values (in N-m) for the various tire samples. Referring to FIG. 10, for Coastdown #1 (i.e., coastdown from 70 kph to 40 kph), no issues were detected in the test band. Referring to FIG. 11, for Coastdown #2 (i.e., 110 kph to 60 kph), tire A shows a possible low-frequency harmonic issue that may not be audible as indicated by arrow 1. Also, tire C (corresponding to the worst arrangement), possible harmonic issues are shown as shown by arrows 2 and 2'.

With respect to subjective noise rating, the parameters shown in Table 1 were observed. Since no harmonics issues appeared in tire A, data is only provided with respect to reference G and its comparative samples B, C, D and E.

**TABLE 1**

| ***All Test Sets are evaluated relative to the Reference Tire - G*** | | | | | |
|---|---|---|---|---|---|
| Notes: ( ) = perceptions [ ] = solicitations; + volume = - rating | | | | | |
| **Batch Number:** | G | B | C | D | E |
| **Airborne Noise** | | | | | |
| **Tread Pattern Noise** | 6.5 | 6.5 | 6.5 | 6.5 | 6.5 |
| (Level quality at critical speeds) | | | | | |
| [60-0 mph coastdown on smooth asphalt] | | | | | |
| **Sizzle** | NR | NR | NR | NR | NR |
| (Level) | | | | | |
| [60 mph on epoxy surface] | | | | | |
| **Cornering Noise** | 6 | 6 | 6 | 6 | 6 |
| (Sub-limit pattern noise goh sha) | | | | | |
| [45 mph sinusoidal steering input on smooth asphalt] | | | | | |

| **Structural/Platform Noise** | | | | | |
|---|---|---|---|---|---|
| **Impact Noise** | NR | NR | NR | NR | NR |
| (Level and duration does not include cavity resonance) | | | | | |
| [35 mph on steps sleats bumps and 45 mph on potholes] | | | | | |
| **Road Noise** | NR | NR | NR | NR | NR |
| (Level and quality does not include cavity resonance) | | | | | |
| [60 kph on weathered asphalt and coarse asphalt] | | | | | |
| **Cavity Noise** | 5 | 5 | 5 | 5 | 5 |
| (Steady stats resonance and impact ring) | | | | | |
| [Multiple solicitations] | | | | | |
| **Joint Slap** | NR | NR | NR | NR | NR |
| (Level) | | | | | |
| [45 mph on concrete expansion joints] | | | | | |
| **Rolling Boom** | NR | NR | NR | NR | NR |
| (Level) | | | | | |
| [60-25 mph coastdown on rippled asphalt] | | | | | |

Table 2 shows comparative test results for LSU averages (notably, radial force variation (VRCC) and lateral force variation (VLCC)), HSU, coastdown noise and subjective noise.

**TABLE 2**

| **Testing** | **G (Reference)** | **A** | **B** | **C** | **D** | **E** |
|---|---|---|---|---|---|---|
| **LSU Averages** | | | | | | |
| **VRCC** | 8.4 | 9.4 | 9.1 | 9.6 | 9 | 8 |
| **VLCC** | 6.5 | 4.5 | 4.4 | 5.6 | 5 | 4.4 |
| **HSU** | No difference trend - All OK. | | | | | |
| **Coastdown Noise** | C may be worse. | | | | | |
| **Subjective Noise** | All equal. | | | | | |

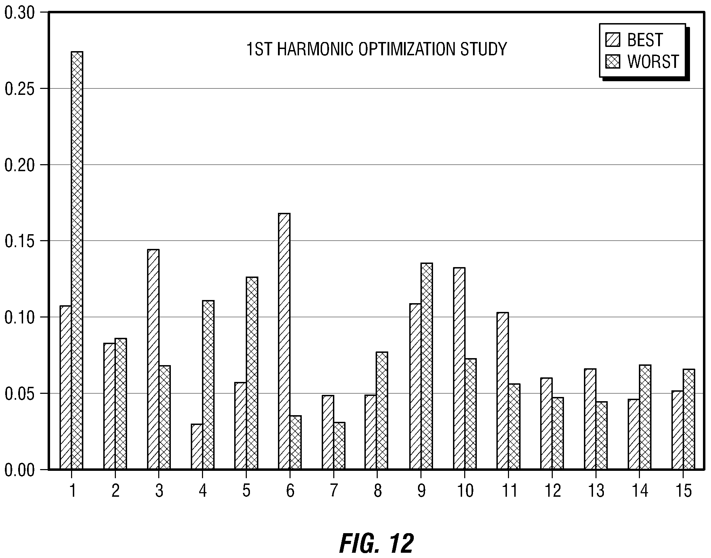

It is revealed in this example that resultant HSU and coastdown noise values validate the benefits of optimizing the placement of mold elements in concert with adjustment of the elements to achieve a desired total plysteer contribution of the mold. For example, a time signal based on DIRAC pulses may be created and placed around the tire at the relative positions of the aligning forces in the contact patch and with an amplitude proportional to the variation in the alignment forces. This is then optimized to minimize the harmonics of the vibrational effects of the variations in the alignment force of the tire. As illustrated in FIG. 12, a harmonic spectrum for the first 15 harmonics is observed for the best and worst-case arrangements as described herein. As variations are created in the elements (i.e., the pitch), the pitches can now be arranged to account for torsional vibration and attenuate tread noise.

It is contemplated that tire pitch sequences may be modified based upon preferred characteristics of the tire vibration generated by selected tread-molding elements. It is therefore possible to reduce the amplitude of noise producing peaks as displayed by the frequency spectrum of the tire and to distribute this energy over a wide frequency band (i.e., to approach "white noise"). Thus, in going around the circumference of the tire, the pitch division sequence may be selectively arranged to attenuate resonance attributable to pitch vibration. Element A may differ from element B, and a pattern may differ from a neighboring pattern. For example, neighboring patterns may differ in the number of elements in each pattern and/or the arrangement of elements in each pattern. A pattern may include at least one of the one or more removable tread-molding elements and the alternative removable tread-molding elements. Each pattern may include at least one of at least one pattern in which one element is equivalent to a neighboring element; at least one pattern in which one element is different from a neighboring element; and at least one pattern that is different from a neighboring pattern.

Mold modification as presently described herein would heretofore indicate mold complexity and associated temporal and fiscal costs. The presently disclosed invention provides a modifiable mold in which only portions of an existing mold need to be adjusted to achieve overall desired harmonic distribution. This may be attained without sacrificing necessary plysteer parameters and without incurring investments of new molds when such parameters require adjustment, either together with, or apart from, adjustments in acoustic performance. Some embodiments of the presently disclosed invention include forming a tire having a tread formed from the mold. In such embodiments, a tire may be formed by molding a tire in a tire mold. It doing so, the tread is molded while attached to the tire. It is understood that any method of forming and molding a tire may be employed. For example, a green tire formed of one or more layers of reinforcements and uncured rubber, which may be natural and/or synthetic, may be placed within a tire mold. The green tire may include tread material arranged annularly around an outer circumference of the tire. Once placed within the tire mold, the mold is heated and the green tire placed under pressure to bond the various layers together and form the final, cured tire.

In other embodiments, forming a tire may be performed by molding a tread in a mold comprising a tread mold. The molded tread is subsequently used to form a tire, such as when, for example, forming a retreaded tire. When forming a retreaded tire, a tread is bonded to a pre-cured tire carcass. Any known method of forming a retreaded tire may be employed. For example, a layer of adhesive or cushion gum (which comprises any natural or synthetic rubber) may be applied to the interface between the tread and tire carcass, and the assembly may be placed into a curing envelope and placed under a vacuum. The enveloped assembly may then be placed within a curing vessel (e.g., an autoclave) and heated under pressure to bond the tread to the tire carcass and form a retreaded tire thereby. So long as at least a tread portion of the tire is molded, the tire may be formed by any known method of forming a tire. It is understood that the tire may be any known tire, whether such tire is a pneumatic or non-pneumatic tire.

A mold may be any type of tire mold used to form a molded tire. A mold may also be any type of tread mold used to form a molded tread. For example, a tread mold may include a retread mold to form a molded tread for later use in manufacturing a retreaded tire. A tread formed in a tread mold may form any tread, including a strip of tread extending lengthwise between opposing ends.

The presently disclosed invention contemplates attenuation of vibration frequency upon adjustment of the total plysteer contribution of the mold by substitution of one or more removable tread-molding elements with at least one alternative removable tread-molding element. The latter may have a plysteer contribution that differs from the plysteer contribution of each removable tread-molding element being substituted. To control plysteer, removable tread-molding elements having different plysteer contributions may be employed. In this manner, the total plysteer contribution of a mold may be adjusted as desired and according to any known method when the plysteer parameter of a tire sufficiently deviates from a target plysteer parameter characterization for the tire. The tire pitch sequence of the mold is correspondingly adjusted to minimize the harmonics of the vibrational effect of the variations in alignment force of the tire. Various harmonic weightings and optimal distribution criteria may be used to ensure an amenable arrangement, such as low harmonics at vibrations implicit to tire manufacturing.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm." Also, the dimensions and values disclosed herein are not limited to a specified unit of measurement. For example, dimensions expressed in English units are understood to include equivalent dimensions in metric and other units (e.g., a dimension disclosed as "1 inch" is intended to mean an equivalent dimension of "2.5 cm").

The terms "at least one" and "one or more" are used interchangeably. Ranges that are described as being "between a and b" are inclusive of the values for "a" and "b."

## Claims

1. A mold (10) for modifying force variation harmonics in a tire (40) having a tread (42) formed from the mold (10), comprising:
an arrangement of tread-molding elements (12) including at least one of one or more removable tread-molding elements (12_{1A}, 12_{1B}, 12_{2A}, 12_{2B}) and one or more alternative removable tread-molding elements (12_{XA}, 12_{XB}) and defining at least one tire pitch sequence;
wherein the alternative removable tread-molding elements (12_{XA}, 12_{XB}) are interchangeable with the removable tread-molding elements (12_{1A}, 12_{1B}, 12_{2A}, 12_{2B}) so that the tread-molding elements (12) are selectively arranged to effect
adjustment of the at least one tire pitch sequence to achieve an overall target harmonic distribution for the arrangement.

2. The mold (10) of claim 1, wherein the plurality of tread-molding elements (12) defines a total plysteer contribution of the mold (10) and includes at least one of:
one or more removable tread-molding elements (12_{1A}, 12_{1B}, 12_{2A}, 12_{2B}) with each element (12_{1A}, 12_{1B}, 12_{2A}, 12_{2B}) having a predetermined plysteer contribution; and
at least one alternative removable tread-molding element (12_{XA}, 12_{XB}) having a predetermined plysteer contribution that differs from the predetermined plysteer contribution of the one or more removable tread-molding elements (12_{1A}, 12_{1B}, 12_{2A}, 12_{2B}).

3. The mold (10) of claim 2, wherein;
a measured harmonic distribution of the at least one tire pitch sequence tire is compared with the overall target harmonic distribution; and
a measured plysteer parameter of the tire (40) is compared with a target plysteer parameter for the tire (40), and the one or more plysteer parameters to be measured and compared include at least one of plysteer residual aligning torque, plysteer residual lateral force and plysteer residual corning force.

4. The mold (10) of claim 3, wherein selective arrangement of the tread-molding elements (12) includes substitution of at least one of the one or more removable tread-molding elements (12_{1A}, 12_{1B}, 12_{2A}, 12_{2B}) with at least one alternative removable tread-molding element (12_{XA}, 12_{XB}) to effect at least one of adjustment of the at least one tire pitch sequence and adjustment of the total plysteer contribution of the mold (10).

5. The mold (10) of claim 4, comprising interchangeable tread-molding elements (12) that include at least one pattern (20) of tread-molding elements (12), with each pattern (20) including at least one of the one or more removable tread-molding elements (12_{1A}, 12_{1B}, 12_{2A}, 12_{2B}) and the alternative removable tread-molding elements (12_{XA}, 12_{XB}), and the at least one pattern (20) including at least one of:
at least one pattern (20) in which one element is equivalent to a neighboring element;
at least one pattern (20) in which one element is different from a neighboring element; and
at least one pattern (20) that is different from a neighboring pattern.

6. The mold (10) of claim 5, wherein a plysteer contribution of one of the one or more removable tread-molding elements (12_{1A}, 12_{1B}, 12_{2A}, 12_{2B}) and the at least one alternative removable tread-molding element (12_{XA}, 12_{XB}) includes a negative plysteer contribution, and a plysteer contribution of another of the one or more removable tread-molding elements (12_{1A}, 12_{1B}, 12_{2A}, 12_{2B}) and the at least one alternative removable tread-molding element (12_{XA}, 12_{XB}) includes a positive plysteer contribution.

7. The mold (10) of claim 5, wherein:
one or more of the removable tread-molding elements (12_{1A}, 12_{1B}, 12_{2A}, 12_{2B}) is substituted with at least one alternative removable tread-molding element (12_{XA}, 12_{XB}) having a smaller plysteer contribution if the measured plysteer parameter of the tire exceeds the target plysteer parameter;
one or more of the removable tread-molding elements (12_{1A}, 12_{1B}, 12_{2A}, 12_{2B}) is substituted with at least one alternative removable tread-molding element (12_{XA}, 12_{XB}) having a greater plysteer contribution if the target plysteer parameter of the tire (40) exceeds the measured plysteer parameter; and
one or more of the removable tread-molding elements (12_{1A}, 12_{1B}, 12_{2A}, 12_{2B}) is substituted with at least one alternative removable tread-molding element (12_{XA}, 12_{XB}) if the measured harmonic distribution differs from the overall target harmonic distribution.

8. The mold (10) of claim 5, wherein each of the one or more removable tread-molding elements (12_{1A}, 12_{1B}, 12_{2A}, 12_{2B}) and the at least one alternative removable tread-molding element (12_{XA}, 12_{XB}) extends partially across a full width of a tread molding cavity (14) to form at least a portion of a ground-engaging side (44) of the tread (42).

9. The mold (10) of claim 8, wherein two or more patterns of tread-molding elements (12) are successively arranged to extend across a substantial full width (W₁₄) of the tread molding cavity (14) and thereby form at least a portion of a ground-engaging side (44) of the tread (42).

10. The mold (10) of claim 5, wherein the at least one alternative removable tread-molding element (12_{XA}, 12_{XB}) is configured to form a lateral groove in the tread (42), and wherein configuring the at least one alternative removable tread-molding element (12_{XA}, 12_{XB}) includes at least one of:
forming a lateral groove in the tread (42) that is different than a lateral groove formed in the tread (42) by the one or more removable tread-molding elements (12_{1A}, 12_{1B}, 12_{2A}, 12_{2B}); and
configuring a difference between lateral grooves to be formed by the one or more removable tread-molding elements (12_{1A}, 12_{1B}, 12_{2A}, 12_{2B}) and lateral grooves to be formed by the at least one alternative removable tread-molding element (12_{XA}, 12_{XB}) by one of:
varying an angle by which each lateral groove deviates from an imaginary reference line extending in a widthwise direction of the tread (42) and normal to a lateral centerline of the tread (42); and
varying an inclination angle of at least one side wall of a pair of side walls arranged on opposing sides of a lateral groove, with the inclination angle measured from an imaginary reference line extending in a depthwise direction of a tread (42) thickness and normal to both a lengthwise direction and a widthwise direction of the tread (42).

## Patentansprüche

1. Form (10) zum Modifizieren von Kraftvariationsharmonischen in einem Reifen (40), der eine Lauffläche (42) hat, die aus der Form (10) gebildet wird, umfassend:
eine Anordnung von laufflächenformenden Elementen (12), die mindestens ein von einem oder mehreren entfernbaren laufflächenformenden Elementen (12_{1A}, 12_{1B}, 12_{2A}, 12_{2B}) und ein oder mehrere alternative entfernbare laufflächenformende Elemente (12_{XA}, 12_{XB}) umfassen und mindestens eine Reifenprofilfolge definieren;
wobei die alternativen entfernbaren laufflächenformenden Elemente (12_{XA}, 12_{XB}) mit den entfernbaren laufflächenformenden Elementen (12_{1A}, 12_{1B}, 12_{2A}, 12_{2B}) austauschbar sind, sodass die laufflächenformenden Elemente (12) selektiv angeordnet sind, um eine Einstellung der mindestens einen Reifenprofilfolge zu bewirken, um eine Verteilung der Harmonischen als Gesamtziel für die Anordnung zu erreichen.

2. Form (10) nach Anspruch 1, wobei die mehreren laufflächenformenden Elemente (12) einen gesamten Ply-Steer-Beitrag der Form (10) definieren und mindestens ein Element aus folgenden umfassen:
ein oder mehrere entfernbare laufflächenformende Elemente (12_{1A}, 12_{1B}, 12_{2A}, 12_{2B}), wobei jedes Element (12_{1A}, 12_{1B}, 12_{2A}, 12_{2B}) einen vorgegebenen Ply-Steer-Beitrag hat; und
mindestens ein alternatives entfernbares laufflächenformendes Element (12_{XA}, 12_{XB}), das einen vorgegebenen Ply-Steer-Beitrag hat, der sich vom vorgegebenen Ply-Steer-Beitrag von dem einen oder den mehreren entfernbaren laufflächenformenden Elementen (12_{1A}, 12_{1B}, 12_{2A}, 12_{2B}) unterscheidet.

3. Form (10) nach Anspruch 2, wobei
eine gemessene Verteilung der Harmonischen der mindestens einen Reifenprofilfolge mit der gesamten Zielverteilung der Harmonischen verglichen wird; und
ein gemessener Ply-Steer-Parameter des Reifens (40) mit dem Ziel-Ply-Steer-Parameter für den Reifen (40) verglichen wird, und der eine oder die mehreren Ply-Steer-Parameter, die gemessen und verglichen werden sollen, umfassen mindestens einen Parameter aus Ply-Steer-Rest-Ausrichtungsdrehmoment, Ply-Steer-Restseitenkraft und Ply-Steer-Restcorningkraft.

4. Form (10) nach Anspruch 3, wobei die selektive Anordnung der laufflächenformenden Elemente (12) die Substitution von mindestens einem Element aus dem einen oder den mehreren entfernbaren laufflächenformenden Elementen (12_{1A}, 12_{1B}, 12_{2A}, 12_{2B}) durch mindestens ein alternatives entfernbares laufflächenformendes Element (12_{XA}, 12_{XB}) umfasst, um mindestens eine Einstellung der mindestens einen Reifenprofilfolge und Einstellung des gesamten Ply-Steer-Beitrags der Form (10) zu bewirken.

5. Form (10) nach Anspruch 4, die austauschbare laufflächenformende Elemente (12) umfasst, die mindestens ein Muster (20) von laufflächenformenden Elementen (12) enthalten, wobei jedes Muster (20) mindestens eines der ein oder mehreren entfernbaren laufflächenformenden Elemente (12_{1A}, 12_{1B}, 12_{2A}, 12_{2B}) und der alternativen entfernbaren laufflächenformenden Elemente (12_{XA}, 12_{XB}) enthält, und wobei das mindestens eine Muster (20) mindestens ein Element der folgenden umfasst:
mindestens ein Muster (20), in dem ein Element einem Nachbarelement äquivalent ist;
mindestens ein Muster (20), in dem ein Element sich von einem Nachbarelement unterscheidet; und
mindestens ein Muster (20), das sich von einem benachbarten Muster unterscheidet.

6. Form (10) nach Anspruch 5, wobei ein Ply-Steer-Beitrag von einem des einen oder der mehreren entfernbaren laufflächenformenden Elemente (12_{1A}, 12_{1B}, 12_{2A}, 12_{2B}) und des mindestens einen alternativen entfernbaren laufflächenformenden Elementes (12_{XA}, 12_{XB}) einen negativen Ply-Steer-Beitrag umfasst, und ein Ply-Steer-Beitrag von einem weiteren aus dem einen oder den mehreren entfernbaren laufflächenformenden Elementen (12_{1A}, 12_{1B}, 12_{2A}, 12_{2B}) und dem mindestens einen alternativen entfernbaren laufflächenformenden Element (12_{XA}, 12_{XB}) umfasst einen positiven Ply-Steer-Beitrag.

7. Form (10) nach Anspruch 5, wobei:
ein oder mehrere der entfernbaren laufflächenformenden Elemente (12_{1A}, 12_{1B}, 12_{2A}, 12_{2B}) durch mindestens ein alternatives entfernbares laufflächenformendes Element (12_{XA}, 12_{XB}) ersetzt ist, das einen kleineren Ply-Steer-Beitrag hat, wenn der gemessene Ply-Steer-Parameter des Reifens den Ziel-Ply-Steer-Parameter übersteigt;
ein oder mehrere der entfernbaren laufflächenformenden Elemente (12_{1A}, 12_{1B}, 12_{2A}, 12_{2B}) durch mindestens ein alternatives entfernbares laufflächenformendes Element (12_{XA}, 12_{XB}) ersetzt ist, das einen größeren Ply-Steer-Beitrag hat, wenn der Ziel-Ply-Steer-Parameter des Reifens (40) den gemessenen Ply-Steer-Parameter übersteigt; und
ein oder mehrere der entfernbaren laufflächenformenden Elemente (12_{1A}, 12_{1B}, 12_{2A}, 12_{2B}) durch mindestens ein alternatives entfernbares laufflächenformendes Element (12_{XA}, 12_{XB}) ersetzt ist, wenn die gemessene Verteilung der Harmonischen sich von der Gesamtzielverteilung der Harmonischen unterscheidet.

8. Form (10) nach Anspruch 5, wobei jedes der ein oder mehreren entfernbaren laufflächenformenden Elemente (12_{1A}, 12_{1B}, 12_{2A}, 12_{2B}) und das mindestens eine alternative entfernbare laufflächenformende Element (12_{XA}, 12_{XB}) sich teilweise über eine volle Breite des laufflächenformenden Hohlraums (14) erstreckt, um mindestens einen Teil einer auf dem Boden laufenden Seite (44) der Lauffläche (42) zu bilden.

9. Form (10) nach Anspruch 8, wobei zwei oder mehr Muster der laufflächenformenden Elemente (12) hintereinander angeordnet sind, sodass sie sich über eine im Wesentlichen volle Breite (W₁₄) des laufflächenformenden Hohlraums (14) erstrecken und dadurch mindestens einen Teil einer auf dem Boden laufenden Seite (44) der Lauffläche (42) erstrecken.

10. Form (10) nach Anspruch 5, wobei das mindestens eine alternative entfernbare laufflächenformende Element (12_{XA}, 12_{XB}) dafür ausgelegt ist, eine seitliche Nut in der Lauffläche (42) zu bilden, und wobei das Konfigurieren des mindestens einen alternativen entfernbaren laufflächenformenden Elementes (12_{XA}, 12_{XB}) mindestens ein Element aus folgenden umfasst:
Bilden einer seitlichen Nut in der Lauffläche (42), die sich von einer seitlichen Nut unterscheidet, die in der Lauffläche (42) durch das eine oder die mehreren laufflächenformenden Elemente (12_{1A}, 12_{1B}, 12_{2A}, 12_{2B}) gebildet wird; und
Konfigurieren einer Differenz zwischen seitlichen Nuten, die durch das eine oder die mehreren entfernbaren laufflächenformenden Elemente (12_{1A}, 12_{1B}, 12_{2A}, 12_{2B}) gebildet werden sollen, und seitlichen Nuten, die durch das mindestens eine alternative entfernbare laufflächenformende Element (12_{XA}, 12_{XB}) gebildet werden sollen, durch eines der folgenden Elemente:
Variieren eines Winkels, durch den jede seitliche Nut von einer imaginären Referenzlinie abweicht, die sich in einer Breitenrichtung der Lauffläche (42) und normal zu einer seitlichen Mittellinie der Lauffläche (42) erstreckt; und
Variieren eines Neigungswinkels von mindestens einer Seitenwand eines Paars von Seitenwänden, die auf gegenüberliegenden Seiten einer seitlichen Nut angeordnet sind, wobei sich der Neigungswinkel, gemessen von einer imaginären Referenzlinie, in einer Tiefenrichtung einer Laufflächen-(42)-Dicke und normal sowohl zu einer Längsrichtung als auch einer Breitenrichtung der Lauffläche (42) erstreckt.

## Revendications

1. Moule (10) pour modifier des harmoniques de variation de force dans un pneumatique (40) comportant une bande de roulement (42) formée à partir du moule (10), comprenant :
un agencement d'éléments de moulage de bande de roulement (12) incluant au moins un ou un ou plusieurs éléments de moulage de bande de roulement amovibles (12_{1A}, 12_{1B}, 12_{2A}, 12_{2B}) et un ou plusieurs éléments de moulage de bande de roulement amovibles alternatifs (12_{XA}, 12_{XB}) et définissant au moins une séquence de pas de pneumatique ;
dans lequel les éléments de moulage de bande de roulement amovibles alternatifs (12_{XA}, 12_{XB}) sont interchangeables avec les éléments de moulage de bande de roulement amovibles (12_{1A}, 12_{1B}, 12_{2A}, 12_{2B}) de telle manière que les éléments de moulage de bande de roulement (12) sont agencés sélectivement pour effectuer un ajustement de l'au moins une séquence de pas de pneumatique pour obtenir une distribution harmonique cible globale pour l'agencement.

2. Moule (10) selon la revendication 1, dans lequel la pluralité d'éléments de moulage de bande de roulement (12) définit une contribution de plysteer totale du moule (10) et inclut au moins un parmi :
un ou plusieurs éléments de moulage de bande de roulement amovibles (12_{1A}, 12_{1B}, 12_{2A}, 12_{2B}) avec chaque élément (12_{1A}, 12_{1B}, 12_{2A}, 12_{2B}) ayant une contribution de plysteer prédéterminée ; et
au moins un élément de moulage de bande de roulement amovible alternatif (12_{XA}, 12_{XB}) ayant une contribution de plysteer prédéterminée qui diffère de la contribution de plysteer prédéterminée de l'un ou plusieurs éléments de moulage de bande de roulement amovibles (12_{1A}, 12_{1B}, 12_{2A}, 12_{2B}).

3. Moule (10) selon la revendication 2, dans lequel ;
une distribution harmonique mesurée de l'au moins une séquence de pas de pneumatique est comparée à la distribution harmonique cible globale ; et
un paramètre de plysteer mesuré du pneumatique (40) est comparé avec un paramètre de plysteer cible pour le pneumatique (40), et les un ou plusieurs paramètres de plysteer à mesurer et comparer incluent au moins un couple d'alignement résiduel de plysteer, une force latérale résiduelle de plysteer et une force de dérive résiduelle de plysteer.

4. Moule (10) selon la revendication 3, dans lequel un agencement sélectif des éléments de moulage de bande de roulement (12) inclut une substitution d'au moins un des un ou plusieurs éléments de moulage de bande de roulement amovibles (12_{1A}, 12_{1B}, 12_{2A}, 12_{2B}) avec au moins un élément de moulage de bande de roulement amovible alternatif (12_{XA}, 12_{XB}) pour effectuer au moins un de l'ajustement de l'au moins une séquence de pas de pneumatique et de l'ajustement de la contribution de plysteer totale du moule (10).

5. Moule (10) selon la revendication 4, comprenant des éléments de moulage de bande de roulement (12) interchangeables qui incluent au moins un motif (20) d'éléments de moulage de bande de roulement (12), avec chaque motif (20) incluant au moins un des un ou plusieurs éléments de moulage de bande de roulement amovibles (12_{1A}, 12_{1B}, 12_{2A}, 12_{2B}) et des éléments de moulage de bande de roulement amovibles alternatifs (12_{XA}, 12_{XB}), et l'au moins un motif (20) incluant au moins un parmi :
au moins un motif (20) dans lequel un élément est équivalent à un élément voisin ;
au moins un motif (20) dans lequel un élément est différent d'un élément voisin ; et
au moins un motif (20) qui est différent d'un motif voisin.

6. Moule (10) selon la revendication 5, dans lequel une contribution de plysteer de l'un des un ou plusieurs éléments de moulage de bande de roulement amovibles (12_{1A}, 12_{1B}, 12_{2A}, 12_{2B}) et de l'au moins un élément de moulage de bande de roulement amovible alternatif (12_{XA}, 12_{XB}) inclut une contribution de plysteer négative, et une contribution de plysteer d'un autre des un ou plusieurs éléments de moulage de bande de roulement amovibles (12_{1A}, 12_{1B}, 12_{2A}, 12_{2B}) et de l'au moins un élément de moulage de bande de roulement amovible alternatif (12_{XA}, 12_{XB}) inclut une contribution de plysteer positive.

7. Moule (10) selon la revendication 5, dans lequel :
un ou plusieurs des éléments de moulage de bande de roulement amovibles (12_{1A}, 12_{1B}, 12_{2A}, 12_{2B}) est remplacé par au moins un élément de moulage de bande de roulement amovible alternatif (12_{XA}, 12_{XB}) ayant une contribution de plysteer plus petite si le paramètre de plysteer mesuré du pneumatique dépasse le paramètre de plysteer cible ;
un ou plusieurs des éléments de moulage de bande de roulement amovibles (12_{1A}, 12_{1B}, 12_{2A}, 12_{2B}) est remplacé par au moins un élément de moulage de bande de roulement amovible alternatif (12_{XA}, 12_{XB}) ayant une contribution de plysteer plus grande si le paramètre de plysteer cible du pneumatique (40) dépasse le paramètre de plysteer mesuré ; et
un ou plusieurs des éléments de moulage de bande de roulement amovibles (12_{1A}, 12_{1B}, 12_{2A}, 12_{2B}) est remplacé par au moins un élément de moulage de bande de roulement amovible alternatif (12_{XA}, 12_{XB}) si la distribution harmonique mesurée diffère de la distribution harmonique cible globale.

8. Moule (10) selon la revendication 5, dans lequel chacun des un ou plusieurs éléments de moulage de bande de roulement amovibles (12_{1A}, 12_{1B}, 12_{2A}, 12_{2B}) et de l'au moins un élément de moulage de bande de roulement amovible alternatif (12_{XA}, 12_{XB}) s'étend partiellement à travers toute une largeur d'une cavité de moulage de bande de roulement (14) pour former au moins une partie d'un côté de prise au sol (44) de la bande de roulement (42).

9. Moule (10) selon la revendication 8, dans lequel deux ou plusieurs motifs des éléments de moulage de bande de roulement (12) sont agencés successivement pour s'étendre à travers une largeur entière (W₁₄) substantielle de la cavité de moulage de bande de roulement (14) et former ainsi au moins une partie d'un côté de prise au sol (44) de la bande de roulement (42).

10. Moule (10) selon la revendication 5, dans lequel l'au moins un élément de moulage de bande de roulement amovible alternatif (12_{XA}, 12_{XB}) est configuré pour former une rainure latérale dans la bande de roulement (42), et dans lequel configurer l'au moins un élément de moulage de bande de roulement amovible alternatif (12_{XA}, 12_{XB}) inclut au moins un parmi ;
former une rainure latérale dans la bande de roulement (42) qui est différente d'une rainure latérale formée dans la bande de roulement (42) par les un ou plusieurs éléments de moulage de bande de roulement amovibles (12_{1A}, 12_{1B}, 12_{2A}, 12_{2B}) ; et
configurer une différence entre des rainures latérales à former par les un ou plusieurs éléments de moulage de bande de roulement amovibles (12_{1A}, 12_{1B}, 12_{2A}, 12_{2B}) et des rainures latérales à former par l'au moins un élément de moulage de bande de roulement amovible alternatif (12_{XA}, 12_{XB}) par l'un parmi :
faire varier un angle par lequel chaque rainure latérale dévie d'une ligne de référence imaginaire s'étendant dans le sens de la largeur de la bande de roulement (42) et normale à une ligne centrale latérale de la bande de roulement (42) ; et
faire varier un angle d'inclinaison d'au moins un flanc d'une paire de flancs agencés sur des côtés opposés d'une rainure latérale, avec l'angle d'inclinaison mesuré à partir d'une ligne de référence imaginaire s'étendant dans une direction dans le sens de la profondeur d'une épaisseur de bande de roulement (42) et normale à la fois à une direction de longueur et une direction de largeur de la bande de roulement (42).
